# EUROPÄISCHE PATENTSCHRIFT

(11) **EP 0 563 412 B1**
(45) Veröffentlichungstag und Bekanntmachung des Hinweises auf die Patenterteilung: **23.08.1995**
(21) Anmeldenummer: 92105407.8
(22) Anmeldetag: 28.03.1992
(51) Int. Cl.: G05B 19/4067

(54) **Werkzeugmaschine mit einer numerischen Steuerung zur Unterbrechung und Fortsetzung der Bearbeitung**
Numerical control of machine-tools with interrupt and restart of machining process
Machine-outil à commande numérique avec interruption et reprise d'usinage

(43) Veröffentlichungstag der Anmeldung: 06.10.1993
(73) Patentinhaber: Dr. Johannes Heidenhain GmbH, D-83292 Traunreut (DE)
(72) Erfinder: Rutkowski, Christian, Dipl.-Phys., W-8220 Traunstein 1 (DE)

(56) Entgegenhaltungen:
- WO-A-87/07970
- FR-A- 2 532 446
- GB-A- 2 176 911

## Beschreibung

Die Erfindung bezieht sich auf eine Werkzeugmaschine nach dem Oberbegriff des Anspruches 1.

Eine derartige Werkzeugmaschine ist aus der Druckschrift WO-A1-87/07970 bekannt, wobei diese Druckschrift auf Mittelpunktsbahn- und Abmessungsdaten des Werkzeuges sowie auf die Richtung der Werkzeugachse nicht explizit eingeht. Es ist aber allgemein bekannt, daß diese Daten zum Betrieb von solchen Werkzeugmaschinen, auf die sich diese Druckschrift bezieht (Werkzeug ist um eine oder mehrere Achsen bewegbar), benutzt werden.

Die Herstellung von Werkstücken mit beliebig gekrümmten Oberflächen - sogenannten Freiformflächen - gehört zu den anspruchsvollsten Zerspanungsaufgaben. Sie erfordert im allgemeinen das numerische Steuern von fünf Achsen. Die Programmierung derartiger Bewegungsabläufe ist durch die gegenseitigen Abhängigkeiten der Bewegungen in den Maschinenachsen sehr aufwendig.

Zudem kommt es nicht selten vor, daß das Bearbeitungsprogramm unterbrochen werden muß, um Fertigungsmaße zu überprüfen oder es mußte wegen Werkzeugverschleiß gestoppt werden. In jedem Fall muß dann das Werkzeug "freigefahren" werden, damit eine Messung erfolgen, oder das Werkzeug gewechselt werden kann.

Anschließend muß das Werkzeug wieder so positioniert werden, daß die Bearbeitung problemlos wieder fortgesetzt werden kann. Um diesen Vorgang zu vereinfachen ist in der DE-C2-26 42 453 vorgeschlagen worden, bei der Fortsetzung des Programmes dieses vom vorgegebenen Anfangspunkt bis zum Anfahrpunkt des Werkstückes "rein steuerungsmäßig abzuarbeiten".

Dieser Vorgang verhindert aber nicht, daß beim Freifahren und Wiederanfahren sogenannte Fräsmarken entstehen, die durch die bekannten Einwirkungen der Schrittkräfte entstehen.

Um unter bestimmten Bedingungen - nämlich am Anfangs- und am Endpunkt einer festprogrammierten Kontur - Fräsmarken zu vermeiden ist auch schon in der DE-C2-31 13 970 vorgeschlagen worden, den Anfangspunkt der Kontur tangential anzufahren und den Endpunkt tangential zu verlassen.

Diese Bedingungen werden bei der Programmierung der Kontur bereits ebenso festgelegt, wie die Korrektur des Werkzeugradius für die Werkzeug-Mittelpunktsbahn.

Ein weiterer Beitrag zum Stand der Technik wird zumindest für die Fortsetzung einer Bearbeitung, in der Druckschrift DE-A1-33 29 658 beschrieben. Hierin wird das Werkzeug auf einer Kreisbahn geführt, die sich tangential an die Mittelpunktsbahn annähert. Die Kreisbahn krümmt sich in der Ebene, in der die Werkzeugachse liegt, was bei der Drehmaschine aus dieser Druckschrift in der Natur ihrer Anordnung liegt.

Die Problemstellung der Vermeidung von Fräsmarken beim Unterbrechen und Fortsetzen des Bearbeitungsprogrammes wird dort nicht abgehandelt, denn sie gehörte ja auch nicht zum Umfeld der dortigen Aufgabenstellung.

Demgegenüber gehört es zur Aufgabe der vorliegenden Erfindung, beim Unterbrechen und/oder Fortsetzen des Bearbeitungsprogrammes Fräsmarken zu vermeiden, und zwar ohne Berücksichtigung eines speziellen Anfangs- oder Endpunktes einer Kontur, sondern an beliebiger Stelle einer beliebig gekrümmten Kontur. Durch diese Vorgabe scheidet die Vorabprogrammierung eines tangentialen Anfahrens und Verlassens der Kontur von vornherein aus, da dort der Anfangs- oder Endpunkt der Kontur und der An- und Ausfahrradius des Werkzeuges festgelegt werden muß.

Die Vorteile der erfindungsgemäßen Vorrichtung liegen darin, daß jederzeit an jedem beliebigen Ort der Kontur das Werkzeug "freigefahren" werden kann, so daß Meßvorgänge oder Werkzeugwechsel durchgeführt werden können, ohne daß Fräsmarken entstehen.

Anhand der Zeichnungen wird die Erfindung mit Hilfe eines Ausführungsbeispieles noch näher erläutert.

Es zeigt
- Figur 1: eine Werkzeugmaschine;
- Figur 2: einen schematischen Freifahrvorgang und
- Figur 3: einen schematischen Anfahrvorgang an eine Werkstück-Oberfläche.

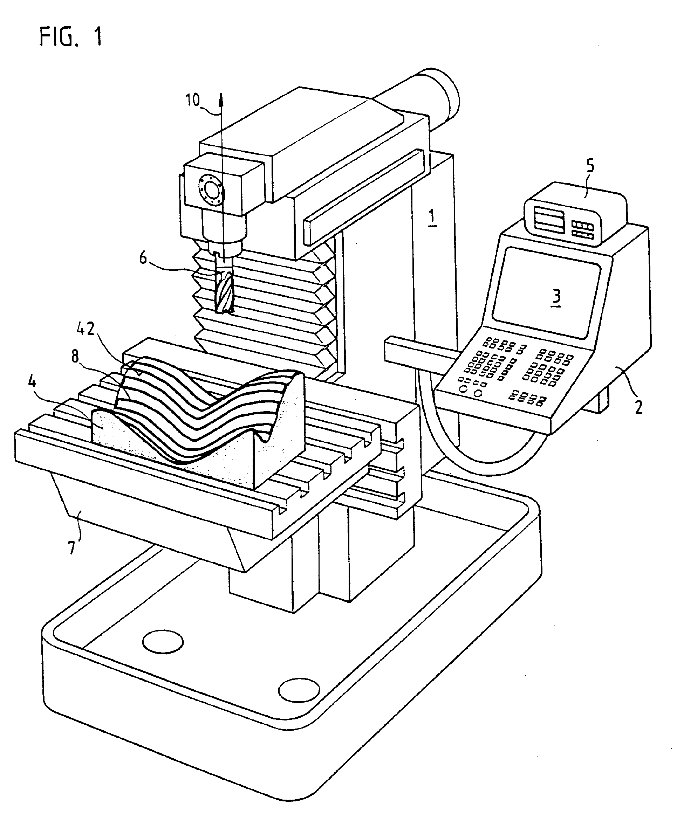

In Figur 1 ist schematisch eine Anordnung zum Fräsen von Freiformflächen gezeigt. Diese Anordnung besteht aus einer Werkzeugmaschine 1 mit einer numerischen Steuerung 2. Die Steuerung 2 weist außer den üblichen bekannten Bauteilen einen Bildschirm 3 auf, auf dem die programmierte Werkstückkontur angezeigt wird und dadurch überprüft werden kann.

Um ein Werkstück 4 herstellen zu können, werden Werkzeugdaten in ein Speichermedium eingegeben, beispielsweise in eine Disketteneinheit 5, aus der sie zur Abarbeitung des Programmes auch wieder ausgelesen werden und im Zusammenwirken mit der numerischen Steuerung 2 das Werkzeug 6 bzw. den Tisch 7 mit dem Werkstück 4 steuern.

Als Werkzeugdaten gelten beispielsweise die Abmessungen und die Form des Werkzeuges 6, seine Mittelpunktsbahn 8 sowie die Richtung der Werkzeugachse 10. Die Richtung der Werkzeugachse 10 spielt bei der vorliegenden Erfindung eine besondere Rolle, deshalb soll sie hier definiert werden um andere, u. U. mißverständliche Auslegungen zu vermeiden: Unter "Richtung der Werkzeugachse 10" im Sinne der vorliegenden Erfindung soll die Richtung verstanden werden, in der zu jedem Zeitpunkt der Bearbeitung ein Freifahren und wieder Anpositionieren möglich ist. Dabei spielt beispielsweise die Lage der Rotationsachse des Werkzeuges 6 keine Rolle. Der im Ausführungsbeispiel gemäß Figur 1 gezeigte Schaftfräser 6 rotiert beispielsweise um seine Längsachse. Ein nicht gezeigter Walzenfräser rotiert zwar auch um seine Längsachse, diese kann aber zur Spindelachse einen ganz anderen Winkel einnehmen, als beim dargestellten Ausführungsbeispiel.

Unter Richtung der Werkzeugachse 10 soll hier also nicht zwingend die Rotationsachse des Werkzeuges 6 oder die Spindelachse der Werkzeugmaschine 1 verstanden werden, sondern ganz allgemein die Richtung, in der das Werkzeug 6 in jeder Bearbeitungsphase freigefahren und/oder anpositioniert werden kann.

Daraus kann sich beispielsweise für die Herstellung von Freiformflächen eine ständig sich verändernde Richtung der Werkzeugachse 10 ergeben.

Die relative Positionierbewegung zwischen herzustellendem Werkstück 4 und Werkzeug 6 erfolgt, wie bereits angedeutet, aufgrund der Werkzeugdaten, die die Mittelpunktsbahn 8 des Werkzeuges 6 festlegen.

Bei Werkzeugwechsel aufgrund von Abnutzungserscheinungen oder Werkzeugbruch sowie bei zwischengeschalteten Meßzyklen muß die spanende Bearbeitung unterbrochen werden. Dazu ist es erforderlich, die Bearbeitung zu jedem beliebigen Zeitpunkt unterbrechen und wieder fortsetzen zu können.

Bei Unterbrechung des Bearbeitungsvorganges lassen die gegenseitigen Kräfteeinwirkungen auf das Werkzeug 6 und das Werkstück 4 nach und das Werkzeug 6 fährt frei. So entstehen die bekannten Fräsmarken. Gleiches wiederholt sich in umgekehrter Reihenfolge beim Fortsetzen der Bearbeitung.

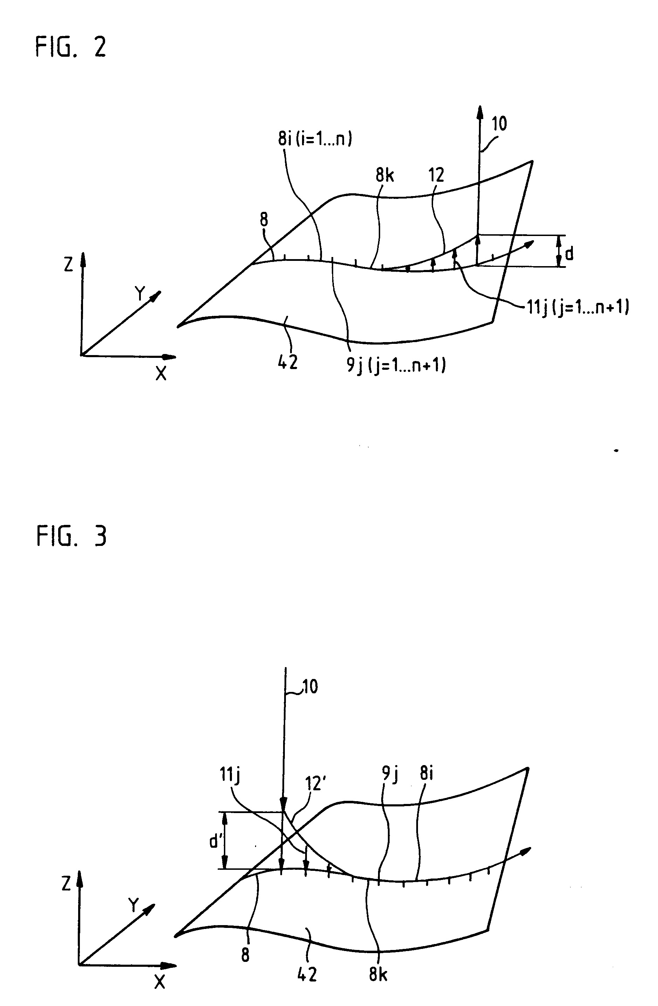

In Figur 2 ist das Prinzip der Erfindung bei der Unterbrechung und in Figur 3 bei der Fortsetzung der Bearbeitung schematisch dargestellt.

Mit 42 ist dabei die Oberfläche des Werkstückes 4 gemäß Figur 1 bezeichnet. Die Oberfläche 42 liegt beliebig im Raum, der durch die drei Koordinaten X, Y, Z bestimmt ist. Diese drei Koordinaten X, Y, Z bestimmen auch die drei Achsen der Werkzeugmaschine 1.

Zur Erzeugung der Oberfläche 42 ist für das Werkzeug 6 (s. Figur 1) eine Mittelpunktsbahn 8 errechnet und im Speichermedium (Disketteneinheit 5) abgelegt. Bei der Bearbeitung wird das Werkzeug 6 durch die numerische Steuerung 2 entlang dieser Mittelpunktsbahn 8 geführt.

Um den Bereich herum, in dem die Bearbeitung unterbrochen werden soll, wird die Mittelpunktsbahn 8 programmtechnisch in eine bestimmte Anzahl von Abschnitten 8i(i=1...n) zerlegt.

Durch die Abschnitte 8i werden sogenannte Stützpunkte 9j(j=1...n+1) erzeugt, die die Abschnitte 8i begrenzen. Die Abschnitte 8i können entweder programmierte Abschnitte 8i in Form von NC-Sätzen zwischen den Stützpunkten 9j sein, oder eine von der Steuerung 2 vorgenommene Unterteilung von programmierten NC-Sätzen darstellen. Dabei wird ein erster Teil von 81 bis 8k Abschnitten genau in der Weise durch die Steuerung 2 interpoliert, wie sie durch das NC-Programm vorgegeben sind.

Im Bereich der folgenden 8k+1 bis 8n Abschnitte werden die durch Interpolation oder Programmierung vorgegebenen Stützpunkte 9k+2 bis 9n+1 so in Richtung der Werkzeugachse 10 verschoben, daß sich das Werkzeug 6 bis auf einen Abstand d von der durch die programmierte Mittelpunktsbahn 8 bestimmten Werkstückoberfläche 42 entfernt.

Mit Hilfe eines Algorithmus, der die Anzahl der Stützpunkte 9j bestimmt, wird der Abstand d in eine beliebige Folge von Verschiebungs-Vektoren 11j mit n-k Gliedern aufgeteilt.

Es ist ein möglichst tangentiales Verlassen der vorprogrammierten Mittelpunktsbahn 8 anzustreben. Um dies zu erreichen erzeugen die Verschiebungs-Vektoren 11j zusammen mit der Mittelpunktsbahn 8 eine Kurve 12, die an ihrem Anfangspunkt die Oberfläche 42 des zu erzeugenden Werkstückes 4 tangiert.

Dadurch, daß das Werkzeug 6 immer in Richtung seiner Werkzeugachse 10 auf der erzeugten Kurve 12 zurückgezogen wird, ergibt sich, daß die Projektion der erzeugten Kurve 12 in Richtung der Werkzeugachse 10 auf die Werkstückoberfläche 42 die vorprogrammierte Mittelpunktsbahn 8 darstellt.

Gleichzeitig mit der Rückzugsbewegung des Werkzeuges 6 in Richtung der Werkzeugachse 10 auf den Abstand d von der Werkstückoberfläche 42 wird die Komponente der Geschwindigkeit in Richtung der programmierten Mittelpunktsbahn 8 bis auf den Wert "0" reduziert. Besonders vorteilhaft geschieht dies, wenn die Reduzierung der Geschwindigkeit in der gleichen Anzahl von Stufen erfolgt, wie Stützpunkte 9j vorgesehen sind.

Nachdem das Werkzeug 6 die entsprechende Anzahl von Abschnitten auf der Kurve 12 durchlaufen hat, hat die Komponente der Geschwindigkeit in Richtung der programmierten Mittelpunktsbahn 8 den Wert "0" und das Werkstück 6 den Abstand d von der Oberfläche 42 des Werkstückes 4. Es kann dann in Richtung der Werkzeugachse 10 vom Werkstück 4 weg bewegt werden, bis der gewünschte Endabstand erreicht ist.

Um die Oberfläche 42 des Werkstückes 4 wieder anzufahren und damit die Bearbeitung des Werkstückes 4 auf der programmierten Mittelpunktsbahn 8 fortzusetzen, wird das Werkzeug 6 bis auf einen Abstand d′ (der aber nicht identisch mit dem Abstand d beim Verlassen der Kontur sein muß) über der Oberfläche 42 des Werkstückes 4 positioniert.

Diese Position ist als Anfangspunkt einer Kurve 12′ zu betrachten, die aus den Abschnitten 81 bis 8k-1 in derselben Weise aus k Verschiebungsvektoren 11j und der programmierten Mittelpunktsbahn 8 erzeugt wird, wie dies für die Kurve 12 beim Verlassen der Werkstückoberfläche geschehen ist. Sukzessive fährt das Werkzeug 6 auf der Kurve 12′ die Oberfläche 42 des Werkstückes 4 an und erreicht am Endpunkt der Kurve 12′ tangential die Mittelpunktsbahn 8.

Vorteilhafterweise erhöht man beim Durchlaufen der Kurve 12′ stufenweise wieder die Geschwindigkeitskomponente in Richtung der vorprogrammierten Mittelpunktsbahn 8 vom Wert "0" auf die Sollgeschwindigkeit.

Die Bestimmung der Abschnittsgrößen sowie die Verschiebungsparameter sind für das Verlassen und das Wiederanfahren grundsätzlich beliebig wählbar, vorteilhafterweise aber gleichartig, jedoch gegensinnig.

## Patentansprüche

1. Werkzeugmaschine (1) mit einer Anordnung zum Herstellen von Werkstücken (4), mit einer numerischen Steuerung (2) und einem Bearbeitungswerkzeug (6), bei der die Mittelpunktsbahn- und Abmessungsdaten des Werkzeuges (6) sowie die Richtung der Werkzeugachse (1) als Werkzeugdaten in einem Speichermedium (5) abgelegt sind, und bei der in der numerischen Steuerung (2) aus der vorgegebenen Mittelpunktsbahn (8) Steuersignale für Positionierbewegungen zwischen Werkstück (4) und Werkzeug (6) gewonnen werden, die die gewünschte Oberflächengestalt (42) des Werkstückes (4) bestimmen, wobei zum Unterbrechen oder Fortsetzen der Bearbeitung vorbestimmbare Abschnitte (8i) der vorgegebenen Mittelpunktsbahn (8) in Richtung der Werkzeugachse (10) verschoben werden, und die Verschiebung in Richtung der Werkzeugachse (10) mit Hilfe eines Algorithmus erfolgt, wobei durch den Algorithmus die Anzahl der Abschnitte (8i) vorbestimmt wird, in deren Verlauf sukzessive ein definierter Abstand (d; d′) zwischen Werkzeug (6) und Werkstück (4) erzeugt wird, dadurch gekennzeichnet, daß mit Hilfe des Algorithmus eine Aufteilung des Abstandes (d; d′) auf die Anzahl der Abschnitte (8i) in Form einer beliebig definierten Folge von Verschiebungs-Vektoren (11j) erfolgt.

2. Werkzeugmaschine (1) nach Anspruch 1, dadurch gekennzeichnet, daß die Verschiebungs-Vektoren (11j) gleicher Anzahl sind wie Stützpunkte (9j), die die Abschnitte (8i) begrenzen.

3. Werkzeugmaschine (1) nach Anspruch 1, dadurch gekennzeichnet, daß die Verschiebungs-Vektoren (11j) zusammen mit der vorgegebenen Mittelpunktsbahn (8) eine Kurve (12, 12′) erzeugen, die an ihren Anfangs- und/oder Endpunkten die Oberfläche (42) des zu erzeugenden Werkstückes (4) tangiert.

4. Werkzeugmaschine (1) nach Anspruch 1, dadurch gekennzeichnet, daß die Projektion der erzeugten Kurve (12, 12′) in Richtung der Werkzeugachse (10) auf die Werkstückoberfläche (42) die vorgegebene Mittelpunktsbahn (8) darstellt.

5. Werkzeugmaschine (1) nach Anspruch 1, dadurch gekennzeichnet, daß die Komponente der Bahngeschwindigkeit entlang der erzeugten Kurve (12, 12′) in vorbestimmbaren Schritten auf den Wert "0" reduziert oder von dem Wert "0" auf die vorgeschriebene Sollgeschwindigkeit beschleunigt wird.

6. Werkzeugmaschine (1) nach Anspruch 1, dadurch gekennzeichnet, daß durch den Algorithmus die Abschnitte (8i) mit Hilfe von Stützpunkten (9j) auf der vorgegebenen Mittelpunktsbahn (8) bestimmt werden, wobei die Stützpunkte (9j) durch ihre Koordinaten in den Achsen (X, Y, Z) der Werkzeugmaschine (1) bestimmt werden.

7. Werkzeugmaschine (1) nach Anspruch 1, dadurch gekennzeichnet, daß die Unterbrechung oder Fortsetzung der Bearbeitung an einundderselben Position der vorgegebenen Mittelpunktsbahn (8) erfolgt.

## Claims

1. A machine tool (1) with an arrangement for producing workpieces (4), a numerical control (2) and a machining tool (6), in which the track of the centre point and the dimensional data of the tool (6) as well as the direction of the tool axis (10) are entered in a storage medium (5) and control signals for positional movements between the workpiece (4) and the tool (6) are derived in the numerical control (2) from the given centre point track (8), which signals determine the desired surface form (42) of the workpiece (4), wherein predeterminable sections (8i) of the given centre point track (8) are displaced in the direction of the tool axis (10) in order to interrupt or re-start the machining, and the displacement in the direction of the tool axis (10) is effected with the aid of an algorithm, where the algorithm determines the number of sections (8i) in whose course a defined spacing (d; d′) is created between the tool (6) and the workpiece (4), characterized in that sub-division of the spacing (d; d′) over the number of sections (8i) is effected with the aid of the algorithm in the form of an arbitrarily defined sequence of displacement vectors (11j).

2. A machine tool (1) according to claim 1, characterized in that the displacement vectors (11j) are of the same number as the points of inflection (9j) which delimit the sections (8i).

3. A machine tool (1) according to claim 1, characterized in that the displacement vectors (11j) together with the given centre point track (8) generate a curve (12, 12′) which is tangential at its start and/or end point to the surface (42) of the workpiece (4) to be created.

4. A machine tool (1) according to claim 1, characterized in that the projection of the generated curve (12, 12′) in the direction of the tool axis (10) on to the surface (42) of the workpiece represents the given centre point track (8).

5. A machine tool (1) according to claim 1, characterized in that the component of the track speed along the generated curve (12, 12′) is reduced by predetermined steps to the value "0" or is accelerated from the value "0" to the prescribed set-point speed.

6. A machine tool (1) according to claim 1, characterized in that the sections (8i) are determined by the algorithm from the given centre point track with the aid of points of inflection (9j), where the points of inflection (9j) are determined by their coordinates on the axes (X, Y, Z) of the machine tool (1).

7. A machine tool (1) according to claim 1, characterized in that the interruption or re-starting of the machining is effected at one and same position of the given centre point track (8).

## Revendications

1. Machine-outil (1) comprenant un agencement pour la fabrication de pièces (4), une commande numérique (2) et un outil d'usinage (6), les données sur la trajectoire du centre d'outil et les données sur les dimensions de l'outil (6) ainsi que la direction de l'axe d'outil (1) étant enregistrées sous forme de données d'outil dans un dispositif de mémoire (5) et la commande numérique (2) produisant, à partir de la trajectoire de centre d'outil (8) prédéfinie, des signaux de commande pour les mouvements de positionnement entre la pièce (4) et l'outil (6), lesquels déterminent la forme de surface (42) désirée de la pièce (4), des tronçons (8i) prédéterminables de la trajectoire de centre d'outil (8) prédéfinie étant, en vue de l'interruption ou de la poursuite de l'usinage, déplacés dans la direction de l'axe d'outil (10), le déplacement dans la direction de l'axe d'outil (10) ayant lieu à l'aide d'un algorithme qui prédétermine le nombre des tronçons (8i) au cours desquels, de façon successive, une distance définie (d; d′) est établie entre l'outil (6) et la pièce (4), caractérisée par le fait qu'à l'aide de l'algorithme, la distance (d; d′) est subdivisée en fonction du nombre de tronçons (8i) en une suite définie quelconque de vecteurs de déplacement (11j).

2. Machine-outil (1) suivant la revendication 1, caractérisée par le fait que le nombre des vecteurs de déplacement (11j) est égal à celui des points d'appui (9j) délimitant les tronçons (6i).

3. Machine-outil (1) suivant la revendication 1, caractérisée par le fait que les vecteurs de déplacement (11j) produisent, conjointement avec la trajectoire de centre d'outil (8) prédéfinie, une courbe (12, 12′) qui, à son point d'origine/et ou à son point terminal, est tangente à la surface (42) de la pièce (4) à produire.

4. Machine-outil (1) suivant la revendication 1, caractérisée par le fait que la projection de la courbe (12, 12′) produite, dans la direction de l'axe d'outil (10) sur la surface (42) de la pièce, représente la trajectoire de centre d'outil (8) prédéfinie.

5. Machine-outil (1) suivant la revendication 1, caractérisée par le fait que la composante de la vitesse de trajectoire le long de la courbe (12, 12′) produite est par échelons prédéterminables, réduite, à la valeur 0 et accélérée de la valeur 0 à la vitesse de consigne prescrite.

6. Machine-outil (1) suivant la revendication 1, caractérisée par le fait que les tronçons (8i) sont déterminés par l'algorithme l'aide de points d'appui (9j) sur la trajectoire de centre d'outil (8) prédéfinie, les points d'appui (9j) étant déterminés par leurs coordonnées suivant les axes (X, Y, Z) de la machine-outil (1).

7. Machine-outil (1) suivant la revendication 1, caractérisée par le fait que l'interruption ou la poursuite de l'usinage a lieu en une seule et même positon de la trajectoire de centre d'outil (8).
